# EUROPEAN PATENT APPLICATION

(11) **EP 3 333 674 A1**
(43) Date of publication of application: **13.06.2018**
(21) Application number: 17206291.1
(22) Date of filing: 08.12.2017
(51) Int. Cl.: G06F 3/01, G06F 3/0488

(54) **SYSTEMS AND METHODS FOR COMPLIANCE SIMULATION WITH HAPTICS**

(30) Priority: 09.12.2016 US 201615374171
(71) Applicant: Immersion Corporation, San Jose, CA 95134 (US)
(72) Inventor: CRUZ-HERNANDEZ, Juan Manuel, Montreal, Québec H2W 2R2 (CA); WU, Liwen, Montreal, Québec H2W 2R2 (CA); OLIEN, Neil T., Montreal, Québec H2W 2R2 (CA); GRANT, Danny A., Montreal, Québec H2W 2R2 (CA); SABOUNE, Jamal, Montreal, Québec H2W 2R2 (CA)
(74) Representative: McDougall, Robert Campbell

(57) **Abstract**

Systems and methods for compliance illusions with haptics are disclosed. One illustrative system described herein includes a user interface device (101) including: a sensor (108) configured to detect a gesture ; a haptic output device (118) configured to output haptic effects; and a processor (102) coupled to the sensor (108) and the haptic output device (118), the processor (102) configured to: receive a sensor signal from the sensor (108); determine a user interaction in mixed reality; determine a haptic effect based in part on the sensor signal and the user interaction; and transmit a haptic signal associated with the haptic effect to the haptic output device (118).

## Description

### Field of the Invention

The present application relates to the field of user interface devices. More specifically, the present application relates to compliance illusions with haptics.

### Background

Handheld devices, including touch-enabled devices have become increasingly popular. For instance, mobile and other devices may be configured with touch-sensitive displays so that a user can provide input by touching portions of the touch-sensitive display. Many devices are further equipped with haptic capability. Mixed reality and virtual reality have both also become increasingly popular. Accordingly, there is a need for haptic effects in mixed reality or virtual reality environments.

### Summary

In one embodiment, a system for compliance illusions with haptics comprises: a user interface device comprising: a sensor configured to detect a gesture; a haptic output device configured to output haptic effects; and a processor coupled to the sensor and the haptic output device, the processor configured to: receive a sensor signal from the sensor; determine a user interaction in mixed reality; determine a haptic effect based in part on the sensor signal and the user interaction; and transmit a haptic signal associated with the haptic effect to the haptic output device.

The system may be modified in any suitable way as disclosed herein including, but not limited to, any one or more of the following. In some embodiments, the haptic signal comprises a sinusoidal carrier wave comprising an envelope and the processor is configured to vary the magnitude of the envelope based in part on a pressure of the gesture. The haptic effect may be configured to simulate compliance of the virtual object. Optionally, the gesture comprises movement between a first location and a second location, and determining a haptic effect comprises determining a haptic effect that changes based in part on a function of a distance between the first location and the second location. In some embodiments, the processor is configured to change one or more of the frequency, amplitude, grain size, grain magnitude, or grain density of the haptic effect based in part on the distance. The first location and the second location may comprise positions in mixed reality, or in real space. In some embodiments, the processor is part of a remote device communicatively coupled to the user interface device. In some embodiments, the processor is a component of the user interface device, and wherein the user interface device comprises a wearable device or a handheld device. Optionally, the sensor is configured to detect the pressure from a user's grip and the haptic output device is configured to output haptic effects to the user's palm. The haptic output device may comprise one or more of: a piezoelectric actuator, an electric motor, an electro-magnetic actuator, a voice coil, a shape memory alloy, an electro-active polymer, a solenoid, an eccentric rotating mass motor, a linear resonant actuator, or an electrostatic output device.

In another embodiment, a method for compliance illusions with haptics comprises: receiving a sensor signal from a sensor configured to detect a gesture; determining a user interaction in mixed reality; determining a haptic effect based in part on the sensor signal and the user interaction; and outputting a haptic signal associated with the haptic effect to a haptic output device configured to output haptic effects.

The method may be modified in any suitable way as disclosed herein including, but not limited to, any one or more of the following. In some embodiments, the haptic signal comprises a sinusoidal carrier wave comprising an envelope and the method further comprises varying the magnitude of the envelope based in part on a pressure of the gesture. The method may further comprise outputting a display signal associated with mixed reality. Optionally, the haptic effect is configured to simulate compliance of the virtual object. In some embodiments, the gesture comprises movement between a first location and a second location and wherein determining a haptic effect comprises determining a haptic effect that changes based in part on a function of a distance between the first location and the second location. Optionally, the first location and the second location may comprise positions in mixed reality, or in real space. In some embodiments, the method further comprises changing one or more of the frequency, amplitude, grain size, grain magnitude, or grain density of the haptic effect based in part on the distance. Optionally, the sensor is configured to detect the pressure from a user's grip and the haptic output device is configured to output haptic effects to the user's palm

In yet another embodiment, a computer readable medium may comprise program code, which when executed by a processor is configured to enable compliance illusions with haptics. This program code may comprise program code configured, when executed by a processor, to: receive a sensor signal from a sensor configured to detect a gesture; determine a user interaction in mixed reality; determine a haptic effect based in part on the sensor signal and the user interaction; and output a haptic signal associated with the haptic effect to a haptic output device configured to output haptic effects.

These illustrative embodiments are mentioned not to limit or define the limits of the present subject matter, but to provide examples to aid understanding thereof. Illustrative embodiments are discussed in the Detailed Description, and further description is provided there. Advantages offered by various embodiments may be further understood by examining this specification and/or by practicing one or more embodiments of the claimed subject matter.

### Brief Description of the Drawings

A full and enabling disclosure is set forth more particularly in the remainder of the specification. The specification makes reference to the following appended figures.
Figure 1A shows an illustrative system for compliance illusions with haptics.
Figure 1B shows an external view of one embodiment of the system shown in Figure 1A.
Figure 1C illustrates an external view of another embodiment of the system shown in Figure 1A.
Figure 2A illustrates an example embodiment for compliance illusions with haptics.
Figure 2B illustrates another example embodiment for compliance illusions with haptics.
Figure 3A illustrates another example embodiment for compliance illusions with haptics.
Figure 3B illustrates another example embodiment for compliance illusions with haptics.
Figure 4 illustrates another example embodiment for compliance illusions with haptics.
Figure 5 is a flow chart of method steps for one example embodiment for compliance illusions with haptics.

### Detailed Description

Reference will now be made in detail to various and alternative illustrative embodiments and to the accompanying drawings. Each example is provided by way of explanation, and not as a limitation. It will be apparent to those skilled in the art that modifications and variations can be made. For instance, features illustrated or described as part of one embodiment may be used in another embodiment to yield a still further embodiment. Thus, it is intended that this disclosure include modifications and variations as come within the scope of the appended claims and their equivalents.

### Illustrative Example of a Device for Compliance Illusions with Haptics

One illustrative embodiment of the present disclosure comprises an electronic device, such as a tablet, e-reader, mobile phone, or computer such as a laptop or desktop computer, or wearable device. The electronic device comprises a display (such as a touch-screen display), a memory, and a processor in communication with each of these elements. In the illustrative embodiment the electronic device is configured to output haptic effects and to execute an application for mixed reality (e.g., virtual reality and/or augmented reality). Further illustrative electronic devices may be configured to output haptic effects to user's using conventional interface devices, e.g., mouse, joystick, multifunction controller, touchscreen, etc..

One illustrative embodiment comprises a mobile device executing a mixed reality application. The mixed reality application may comprise one or more virtual objects, e.g., objects within the application or characters within the application. In some embodiments, the user may interact with one of these objects. In the illustrative embodiment the mobile device is configured to determine and output one or more haptic effects associated with the interaction. For example, the user may press on one of the virtual objects (e.g., on the surface of a touch-sensitive display or from the sides of an input device). In response the illustrative mobile device outputs a haptic effect.

In the illustrative embodiment, the haptic effect is configured to simulate a compliance of the object (e.g., simulate a rigidity of the object during the interaction). Such a haptic effect may comprise a vibrotactile haptic effect with specific envelope and frequency modulations configured to simulate compliance on one or more surfaces of the mobile device. A compliance illusion may be achieved by modulating a vibration effect as a function of the sensed force/pressure, with the vibration created with a granular synthesis method. When the device outputs such a haptic effect the user may feel the haptic effect as a variance in the compliance (e.g., the rigidity) of a surface of the electronic device. This haptic effect may be coordinated with audio and/or visual effects to further enhance the experience. For example, the object shown in a display may flex at the time the haptic effect is output.

In another illustrative embodiment, the user may interact with objects in a mixed reality or virtual reality interface using a controller, e.g., a gaming interface, a paddle, joystick, multifunction controller, wearable device (e.g., watch, band, headband, glove, shoes etc.), or a mobile device (e.g., a smartphone or tablet). In such an embodiment, as the user interacts with one or more objects in the mixed reality or virtual reality interface, a processor may determine haptic effects associated with compliance of the objects and output these haptic effects to the user via the controller. In some embodiments, the haptic effects may be coordinated with audio and/or visual effects to further enhance the experience. For example, in such an embodiment, the controller may be communicatively coupled to a headset for mixed reality or virtual reality. In such an embodiment, the object shown in a display (e.g., a headset or display screen) may flex at the time the haptic effect is output.

### Illustrative Systems for Compliance Illusions with Haptics

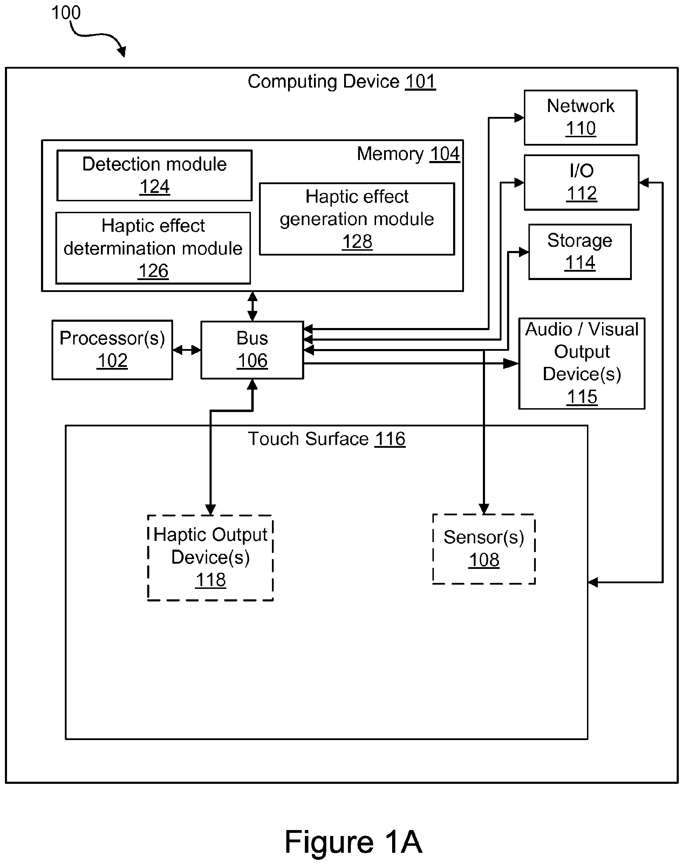

Figure 1A shows an illustrative system 100 for compliance illusions with haptics. Particularly, in this example, system 100 comprises a computing device 101 having a processor 102 interfaced with other hardware via bus 106. A memory 104, which can comprise any suitable tangible (and non-transitory) computer-readable medium such as RAM, ROM, EEPROM, or the like, embodies program components that configure operation of the computing device. In this example, computing device 101 further includes one or more network interface devices 110, input/output (I/O) interface components 112, and additional storage 114.

[0023] Network device 110 can represent one or more of any components that facilitate a network connection. Examples include, but are not limited to, wired interfaces such as Ethernet, USB, IEEE 1394, and/or wireless interfaces such as IEEE 802.11, Bluetooth, or radio interfaces for accessing cellular telephone networks (e.g., transceiver/antenna for accessing a CDMA, GSM, UMTS, or other mobile communications network).

I/O components 112 may be used to facilitate connection to devices such as one or more displays, headsets comprising displays, curved displays (e.g., the display includes angled surfaces extended onto one or more sides of computing device 101 on which images may be displayed), keyboards, mice, speakers, microphones, cameras (e.g., a front and/or a rear facing camera on a mobile device) and/or other hardware used to input data or output data. Storage 114 represents nonvolatile storage such as magnetic, optical, or other storage media included in device 101.

Audio/visual output device(s) 115 comprise one or more devices configured to receive signals from processor(s) 102 and provide audio or visual output to the user. For example, in some embodiments, audio/visual output device(s) 115 may comprise a display such as a touch-screen display, LCD display, plasma display, CRT display, projection display, a headset comprising a display for each eye (e.g., for use in mixed reality or virtual reality), or some other display known in the art. Further, audio/visual output devices may comprise one or more speakers configured to output audio to a user.

System 100 further includes a touch surface 116, which, in this example, is integrated into device 101. Touch surface 116 represents any surface that is configured to sense touch input of a user. In some embodiments, touch surface 116 may be configured to detect additional information associated with the touch input, e.g., the pressure, speed of movement, acceleration of movement, temperature of the user's skin, or some other information associated with the touch input. One or more sensors 108 may be configured to detect a touch in a touch area when an object contacts a touch surface and provide appropriate data for use by processor 102. Any suitable number, type, or arrangement of sensors can be used. For example, resistive and/or capacitive sensors may be embedded in touch surface 116 and used to determine the location of a touch and other information, such as pressure. As another example, optical sensors with a view of the touch surface may be used to determine the touch position.

Further, in some embodiments, touch surface 116 and or sensor(s) 108 may comprise a sensor that detects user interaction without relying on a touch sensor. For example, in one embodiment, the sensor may comprise a sensor configured to use electromyography (EMG) signals to detect pressure applied by a user on a surface. Further, in some embodiments, the sensor may comprise RGB or thermal cameras and use images captured by these cameras to estimate an amount of pressure the user is exerting on a surface.

In some embodiments, sensor 108 and touch surface 116 may comprise a touch-screen or a touch-pad. For example, in some embodiments, touch surface 116 and sensor 108 may comprise a touch-screen mounted overtop of a display configured to receive a display signal and output an image to the user. In other embodiments, the sensor 108 may comprise an LED detector. For example, in one embodiment, touch surface 116 may comprise an LED finger detector mounted on the side of a display. In some embodiments, the processor is in communication with a single sensor 108, in other embodiments, the processor is in communication with a plurality of sensors 108, for example, a first touch screen and a second touch screen. In some embodiments one or more sensor(s) 108 further comprise one or more sensors configured to detect movement of the mobile device (e.g., accelerometers, gyroscopes, cameras, GPS, or other sensors). These sensors may be configured to detect user interaction that moves the device in the X, Y, or Z plane. The sensor 108 is configured to detect user interaction, and based on the user interaction, transmit signals to processor 102. In some embodiments, sensor 108 may be configured to detect multiple aspects of the user interaction. For example, sensor 108 may detect the speed and pressure of a user interaction, and incorporate this information into the interface signal. Further, in some embodiments, the user interaction comprises a multi-dimensional user interaction away from the device. For example, in some embodiments a camera associated with the device may be configured to detect user movements, e.g., hand, finger, body, head, eye, or feet motions or interactions with another person or object.

In some embodiments, the input may comprise a gesture. A gesture is any movement of the body that conveys meaning or user intent. It will be recognized that simple gestures may be combined to form more complex gestures. For example, bringing a finger into contact with a touch sensitive surface may be referred to as a "finger on" gesture, while removing a finger from a touch sensitive surface may be referred to as a separate "finger off" gesture. If the time between the "finger on" and "finger off" gestures is relatively short, the combined gesture may be referred to as "tapping;" if the time between the "finger on" and "finger off" gestures is relatively long, the combined gesture may be referred to as "long tapping;" if the distance between the two dimensional (x, y) positions of the "finger on" and "finger off" gestures is relatively large, the combined gesture may be referred to as "swiping;" if the distance between the two dimensional (x, y) positions of the "finger on" and "finger off" gestures is relatively small, the combined gesture may be referred to as "smearing," "smudging," or "flicking." Any number of two dimensional or three dimensional simple or complex gestures may be combined in any manner to form any number of other gestures, including, but not limited to, multiple finger contacts, palm or first contact, or proximity to the device. A gesture can also be any form of hand movement recognized by a device having an accelerometer, gyroscope, or other motion sensor, and converted to electronic signals. Such electronic signals can activate a dynamic effect, such as shaking virtual dice, where the sensor captures the user intent that generates a dynamic effect.

In this example, a haptic output device 118 in communication with processor 102 is coupled to touch surface 116. In some embodiments, haptic output device 118 is configured, in response to a haptic signal, to output a haptic effect simulating a compliance of the touch surface. Additionally or alternatively, haptic output device 118 may provide vibrotactile haptic effects that move the touch surface in a controlled manner. Some haptic effects may utilize an actuator coupled to a housing of the device, and some haptic effects may use multiple actuators in sequence and/or in concert. For example, in some embodiments, a surface texture may be simulated by vibrating the surface at different frequencies. In such an embodiment haptic output device 118 may comprise one or more of, for example, a piezoelectric actuator, an electric motor, an electro-magnetic actuator, a voice coil, a shape memory alloy, an electro-active polymer, a solenoid, an eccentric rotating mass motor (ERM), or a linear resonant actuator (LRA). In some embodiments, haptic output device 118 may comprise a plurality of actuators, for example an ERM and an LRA. In still other embodiments, the haptic output device 118 may use non-actuated haptics (e.g., air, fluid, or ultrasonic output) that provide resistance as a means to convey rougher surfaces.

In some embodiments, one or more haptic output devices may be configured to output forces in the X, Y, or Z plane with respect to the device. In some embodiments, these effects may be configured to simulate compliance of an object. For example, a vibrotactile effect may be used to simulate compliance. In some embodiments, a haptic effect configured to simulate compliance may be generated using a haptic signal comprising granular synthesis. In such a haptic signal, several parameters may be used to generate different compliances. For example parameters may include:
- grain size: period of sinusoid in the grain;
- grain density: may be used to control grain frequency, a higher grain density references to higher grain frequency;
- max grain per cycle: maximum grain number for each update, this is another parameter that is used to control grain frequency, the higher the number of grains per update, the higher grain frequency; and/or
- grain magnitude: the maximum magnitude of the grain.

In some embodiments, each of these parameters may be adjusted or modulated to generate haptic effects that simulate compliance. The table below includes parameters for two example haptic effects that simulate compliance.

| **Compliance Effect 1** | **Compliance Effect 2** |
|---|---|
| Grain size = 20; | Grain size = 5; |
| Grain magnitude = 0.4; | Grain magnitude = 0.75; |
| Grain density = 30; | Grain density = 100; |
| Max Grain per Cycle = 1; | Max Grain per Cycle = 100; |

In the example above, compliance effect 2 may generate more compliant and elastic illusion compared to compliance effect 1. In some embodiments, the parameters may be changed dynamically based on input values. In such an embodiment, the input value could be a pressure value, travel distance, or other parameters of VR/AR objects. For example, in some embodiments one or more of the parameters can be increased or decreased with the increase or decrease of the input value. In some embodiments, this may generate more dynamic compliance illusions. In other embodiments, the haptic signal may comprise, e.g., a sawtooth-down grain with a sinusoid carrier, and the magnitude of the envelope variable as a function of the pressure exerted on the touch surface by the user. In some embodiments, the sinusoidal carrier may have frequencies from 80Hz to 300Hz and while the rest of the grain remains the same. In such a haptic signal, the frequency variation may simulate smooth to rough deformation illusions.

In some embodiments, the haptic effect may be modulated based on other sensed information about user interaction, e.g., relative position of hands in a virtual environment, object position in a VR/AR environment, object deformation, relative object interaction in a GUI, UI, AR, VR, etc. In still other embodiments, methods to create the haptic effects include the variation of an effect of short duration where the magnitude of the effect varies as a function of a sensed signal value (e.g., a signal value associated with user interaction). In some embodiments, when the frequency of the effect can be varied, a fixed perceived magnitude can be selected and the frequency of the effect can be varied as a function of the sensed signal value.

For example, in one embodiment a user may make a gesture in real space, e.g., a hand movement. During the movement, the user's hand may be tracked as it moves from a first location to a second location. A haptic effect may be determined based on this gesture. Further, the haptic effect may be varied as a function of the user's position (e.g., a function of the distance between the two points or the user's position between the two points). For example, in one embodiment the processor 101 may modify one or more of the frequency, amplitude, grain size, grain magnitude, or grain density of the haptic effect based in part on the gesture (e.g., based on the distance between two points and/or the distance between the user's hand and one of the points). Further, in some embodiments, the gesture may comprise a gesture in mixed reality. Thus, in some embodiments, the gesture may comprise a gesture in virtual reality, and may comprise a movement between two points in virtual reality.

Although a single haptic output device 118 is shown here, embodiments may use multiple haptic output devices of the same or different type to output haptic effects. For example, in one embodiment, a piezoelectric actuator may be used to displace some or all of touch surface 116 vertically and/or horizontally at ultrasonic frequencies, such as by using an actuator moving at frequencies greater than 20 - 25 kHz in some embodiments. In some embodiments, multiple actuators such as eccentric rotating mass motors and linear resonant actuators can be used alone or in concert to provide different textures and other haptic effects.

In still other embodiments, haptic output device 118 may use electrostatic force, for example by use of an electrostatic surface actuator, to simulate a texture on the surface of touch surface 116. Similarly, in some embodiments haptic output device 118 may use electrostatic force to vary the friction the user feels on the surface of touch surface 116. For example, in one embodiment, haptic output device 118 may comprise an electrostatic display or any other device that applies voltages and currents instead of mechanical motion to generate a haptic effect. In such an embodiment, an electrostatic actuator may comprise a conducting layer and an insulating layer. In such an embodiment, the conducting layer may be any semiconductor or other conductive material, such as copper, aluminum, gold, or silver. And the insulating layer may be glass, plastic, polymer, or any other insulating material.

The processor 102 may operate the electrostatic actuator by applying an electric signal to the conducting layer. The electric signal may be an AC signal that, in some embodiments, capacitively couples the conducting layer with an object near or touching touch surface 116. In some embodiments, the AC signal may be generated by a high-voltage amplifier. In other embodiments the capacitive coupling may simulate a friction coefficient or texture on the surface of the touch surface 116. For example, in one embodiment, the surface of touch surface 116 may be smooth, but the capacitive coupling may produce an attractive force between an object near the surface of touch surface 116. In some embodiments, varying the levels of attraction between the object and the conducting layer can vary the simulated texture on an object moving across the surface of touch surface 116 or vary the coefficient of friction felt as the object moves across the surface of touch surface 116. Furthermore, in some embodiments, an electrostatic actuator may be used in conjunction with traditional actuators to vary the simulated texture on the surface of touch surface 116. For example, the actuators may vibrate to simulate a change in the texture of the surface of touch surface 116, while at the same time; an electrostatic actuator may simulate a different texture, or other effects, on the surface of touch surface 116 or on another part of the computing device 101 (e.g., its housing or another input device).

In some embodiments, an electrostatic actuator may be used to generate a haptic effect by stimulating parts of the body near or in contact with the touch surface 116. For example, in some embodiments, an electrostatic actuator may stimulate the nerve endings in the skin of a user's finger or components in a stylus that can respond to the electrostatic actuator. The nerve endings in the skin, for example, may be stimulated and sense the electrostatic actuator (e.g., the capacitive coupling) as a vibration or some more specific sensation. For example, in one embodiment, a conducting layer of an electrostatic actuator may receive an AC voltage signal that couples with conductive parts of a user's finger. As the user touches the touch surface 116 and moves his or her finger on the touch surface, the user may sense a texture of prickliness, graininess, bumpiness, roughness, stickiness, or some other texture.

Turning to memory 104, exemplary program components 124, 126, and 128 are depicted to illustrate how a device can be configured in some embodiments to provide compliance illusions with haptics. In this example, a detection module 124 configures processor 102 to monitor touch surface 116 via sensor 108 to determine a touch, e.g., the position and/or pressure of a touch. For example, module 124 may sample sensor 108 in order to track the presence or absence of a touch and, if a touch is present, to track one or more of the location, path, velocity, acceleration, pressure, and/or other characteristics of the touch over time.

Haptic effect determination module 126 represents a program component that analyzes data regarding touch characteristics to select a haptic effect to generate. For example, in one embodiment, module 126 comprises code that determines, based on the touch, a haptic effect to generate. For example, module 126 may comprise program code configured to determine a grain size, grain density, max grain per cycle, and/or grain magnitude for a haptic signal, based in part on the touch (e.g., the pressure of the touch). Alternatively, in some embodiments, haptic effect determination module 126 may comprise one or more preloaded haptic effects, e.g., haptic effects associated with particular objects in a mixed reality or virtual reality environment. These haptic effects may comprise any type of haptic effect that haptic output device(s) 118 are capable of generating. Further, in some embodiments, module 126 may comprise program code configured to manipulate characteristics of a haptic effect, e.g., the effect's intensity, frequency, duration, duty cycle, or any other characteristic associated with a haptic effect. In some embodiments, module 126 may comprise program code to allow the user to manipulate these characteristics, e.g., via a graphical user interface.

Further, in some embodiments, module 126 may comprise program code configured to determine haptic effects based on user interactions. For example, module 126 may be configured to monitor user input on touch surface 116 or other sensors, such as inertial sensors, configured to detect motion of the mobile device. Module 126 may detect this input and generate a haptic effect based on the input. For example, in some embodiments module 126 may be configured to determine a haptic effect configured to simulate the user interaction.

Haptic effect generation module 128 represents programming that causes processor 102 to generate and transmit a haptic signal to haptic output device 118, which causes haptic output device 118 to generate the selected haptic effect. For example, generation module 128 may access stored waveforms or commands to send to haptic output device 118. As another example, haptic effect generation module 128 may receive a desired type of effect and utilize signal processing algorithms to generate an appropriate signal to send to haptic output device 118. As a further example, a desired effect may be indicated along with target coordinates for the haptic effect and an appropriate waveform sent to one or more actuators to generate appropriate displacement of the surface (and/or other device components) to provide the haptic effect. Some embodiments may utilize multiple haptic output devices in concert to output a haptic effect.

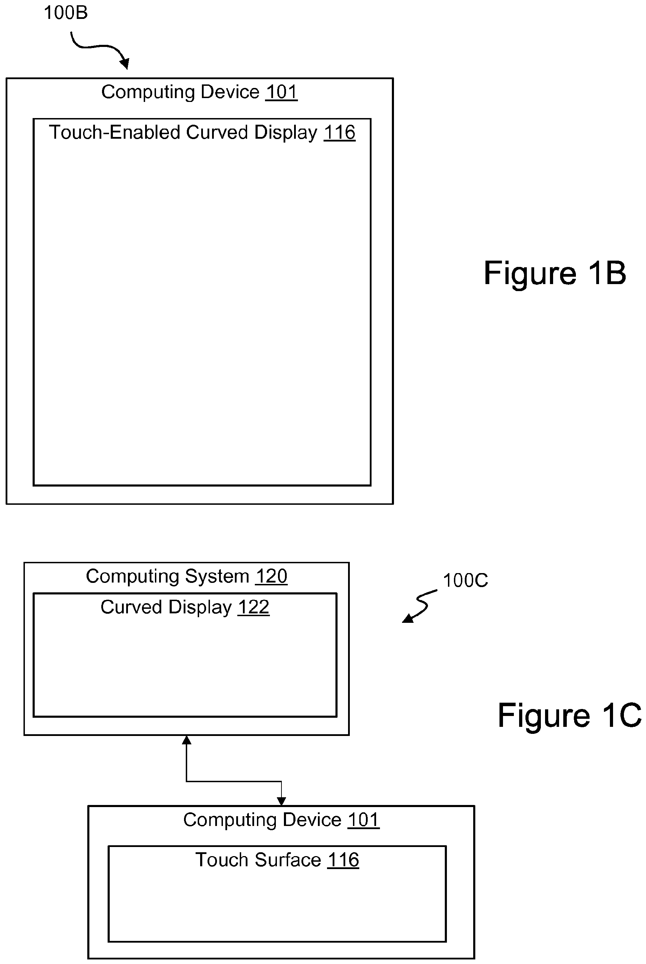

A touch surface may overlay (or otherwise correspond to) a display, depending on the particular configuration of a computing system. In Figure 1B, an external view of a computing system 100B is shown. Computing device 101 includes a touch enabled display 116 that combines a touch surface and a display of the device. The touch surface may correspond to the display exterior or one or more layers of material above the actual display components.

Figure 1C illustrates another example of a touch enabled computing system 100C in which the touch surface does not overlay a display. In this example, a computing device 101 features a touch surface 116 which may be mapped to a graphical user interface provided in a display 122 that is included in computing system 120 interfaced to device 101. For example, computing device 101 may comprise a mouse, trackpad, or other device, while computing system 120 may comprise a desktop or laptop computer, set-top box (e.g., DVD player, DVR, cable television box), or another computing system. As another example, touch surface 116 and display 122 may be disposed in the same device, such as a touch enabled trackpad in a laptop computer featuring display 122. Whether integrated with a display or otherwise, the depiction of planar touch surfaces in the examples herein is not meant to be limiting. Other embodiments include curved or irregular touch enabled surfaces that are further configured to provide haptic effects, for example, haptic effects configured to simulate compliance illusions.

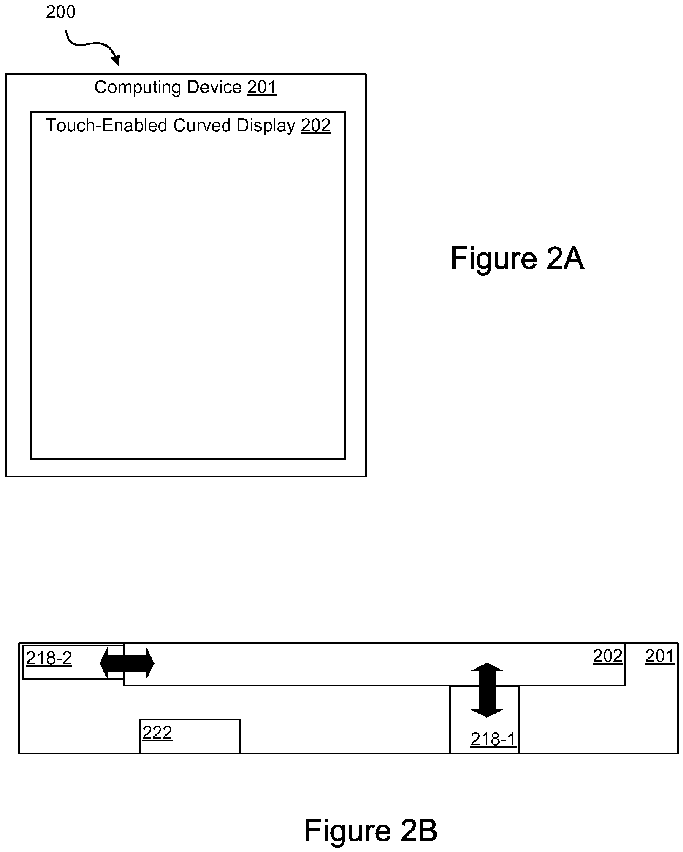

Figures 2A-2B illustrate an example embodiment of a device for compliance illusions with haptics. Figure 2A is a diagram illustrating an external view of a system 200 comprising a computing device 201 that features a display 202. Figure 2B shows a cross-sectional view of device 201. Device 201 may be configured similarly to device 101 of Figure 1A, though components such as the processor, memory, sensors, and the like are not shown in this view for purposes of clarity.

As can be seen in Figure 2B, device 201 features a plurality of haptic output devices 218 and an additional haptic output device 222. Haptic output device 218-1 may comprise an actuator configured to impart vertical force to display 202, while 218-2 may move display 202 laterally. In this example, the haptic output devices 218, 222 are coupled directly to the display, but it should be understood that the haptic output devices 218, 222 could be coupled to another touch surface, such as a layer of material on top of display 202. Furthermore, it should be understood that one or more of haptic output devices 218 or 222 may comprise an electrostatic actuator, as discussed above. Furthermore, haptic output device 222 may be coupled to a housing containing the components of device 201. In the examples of Figures 2A-2B, the area of display 202 corresponds to the touch area, though the principles could be applied to a touch surface completely separate from the display.

In one embodiment, haptic output devices 218 each comprise a piezoelectric actuator, while additional haptic output device 222 comprises an eccentric rotating mass motor, a linear resonant actuator, or another piezoelectric actuator. Haptic output device 222 can be configured to provide a vibrotactile haptic effect in response to a haptic signal from the processor. The vibrotactile haptic effect can be utilized in conjunction with surface-based haptic effects and/or for other purposes.

In some embodiments, either or both haptic output devices 218-1 and 218-2 can comprise an actuator other than a piezoelectric actuator. Any of the actuators can comprise a piezoelectric actuator, an electromagnetic actuator, an electroactive polymer, a shape memory alloy, a flexible composite piezo actuator (e.g., an actuator comprising a flexible material), electrostatic, and/or magnetostrictive actuators, for example. Additionally, haptic output device 222 is shown, although multiple other haptic output devices can be coupled to the housing of device 201 and/or haptic output devices 222 may be coupled elsewhere. Device 201 may feature multiple haptic output devices 218-1 / 218-2 coupled to the touch surface at different locations, as well.

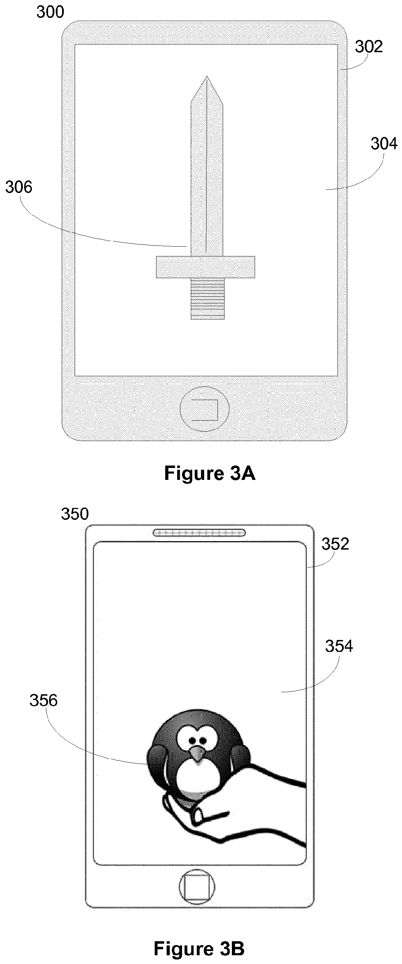

Turning now to Figure 3A, which shows system 300. System 300 comprises a mobile device 302, display 304, and an object 306 shown in the display 304. Mobile device 302 comprises any type of mobile device known in the art, e.g., a smartphone, tablet, laptop, or other type of device. Display 304 may further comprise a touch-sensitive input device, e.g., a touch-screen.

Object 306 is shown in display 302. As shown in Figure 3A, object 306 comprises a sword. This sword 306 may be an object for use in a mixed reality or virtual reality interface. For example, sword 306 may be a weapon usable in a mixed reality or virtual reality game.

In the embodiment shown in Figure 3A, sensors on the mobile device 302 detect user interaction with sword 306. These sensors may comprise, e.g., sensors on the touch screen or other sensors throughout the surface of the device 302. These sensors may detect the pressure of the user interaction (e.g., the strength of the user's grip, or pressure of the user's touch on the touch-screen). As the user interacts with sword 306, the mobile device 302 determines and outputs haptic effects configured to simulate the compliance of the sword. In some embodiments, these haptic effects may simulate the stiffness of the sword 306. In other embodiments, the haptic effects may simulate movement or impacts with the sword 306, e.g., as the user engages in a battle in the mixed reality or virtual reality interface.

In some embodiments, the device 302 may determine haptic effects based in part on the detected pressure of the user interaction. Further, the device 302 may determine a haptic effect by determining and adjusting the parameters of a haptic signal, e.g., a grain size, grain density, max grain per cycle, and/or grain magnitude for a haptic signal, based in part on the pressure of the user interaction.

Further, in some embodiments, rather than displaying the sword 306 in a touch-screen on a mobile device, the sword 306 may instead be displayed on a remote display or a wearable display (e.g., a headset) for use in a virtual reality or mixed reality environment. In such an embodiment, device 302 may not comprise a display, and may instead be a gaming controller (e.g., a paddle or multifunctional controller), which the user may manipulate in order to interact with the mixed reality or virtual reality environment.

Turning now to Figure 3B, which shows system 350. System 350 comprises a mobile device 352, display 354, and an object 356 shown in the display. Mobile device 352 comprises any type of mobile device known in the art, e.g., a smartphone, tablet, laptop, or other type of device. Display 354 may further comprise a touch-sensitive input device, e.g., a touch-screen.

Object 356 is shown in display 352. As shown in Figure 3B, object 356 comprises a character. This character 356 may be a character in a mixed reality or virtual reality interface. For example, character 356 may be a character that the user captures within a mixed reality or virtual reality game.

In the embodiment shown in Figure 3A, sensors on the mobile device 352 detect user interaction with character 356. These sensors may comprise, e.g., sensors on the touch screen or other sensors throughout the surface of the device 352. These sensors may detect the pressure of the user interaction (e.g., the strength of the user's grip, or pressure of the user's touch on the touch-screen). As the user interacts with character 356, the mobile device 352 determines and outputs haptic effects configured to simulate the compliance of the character. In some embodiments, these haptic effects may simulate the stiffness or softness of the character 356. For example, in some embodiments the character 356 may feel stiff, like a marble. In other embodiments, the character 356 may feel comparatively compliant, e.g., like an inflated balloon or water balloon. In other embodiments, the haptic effects may simulate movement of the character 356, e.g., as the character struggles to free itself from the user's grip.

Further, in some embodiments, the strength of a user's gesture (e.g., the amount of pressure a user applies to a virtual object) does not have to be determined as the actual pressure applied by the user (e.g., because an object in mixed or virtual reality may not exist in the real world). In some embodiments, the strength of the user's gesture may be determined, or simulated, according to other inputs, such as the angle of the gesture (e.g., the angle of the user's fingers during the gesture (e.g., a squeezing gesture)). In some embodiments, this data may be determined from tracking sensors (e.g., Leap Motion). In some embodiments, the strength of the user's gesture can also map to other inputs such as joysticks, buttons, keyboards, etc. For example, a processor may determine that a very strong gesture is intended to press a button, while a weaker gesture is intended to bring up a new user interface.

In some embodiments, the device 352 may determine haptic effects based in part on the detected pressure of the user interaction. Further, the device 352 may determine a haptic effect by determining and adjusting the parameters of a haptic signal, e.g., a grain size, grain density, max grain per cycle, and/or grain magnitude for a haptic signal, based in part on the pressure of the user interaction.

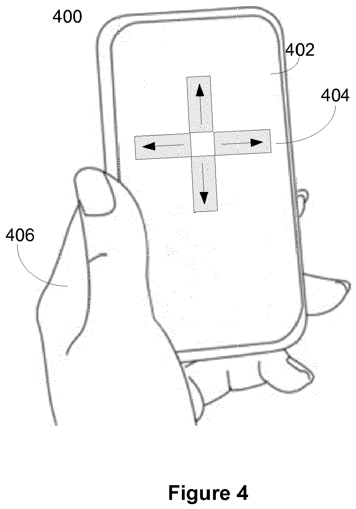

Turning now to Figure 4, Figure 4 shows system 400. The system 400 comprises a handheld device 402, with an input interface 404. The handheld device 402 is controlled by a user 406.

The handheld device 402 comprises any type of handheld device known in the art, e.g., a gaming controller (e.g., paddle, joystick, or multifunction controller), a smartphone, tablet, laptop, or other type of device. In the embodiment, shown handheld device further comprises directional buttons 404. In some embodiments, these directional input buttons 404 may be fixed buttons, in other embodiments, they may be displayed on a touch-screen display.

Handheld device 402 comprises one or more sensors, e.g., inertial sensors, pressure sensors, buttons, and/or touch-sensitive input devices. The user 406 may interact with the handheld device 402 in order to interact with a mixed reality or virtual reality interface. For example, the user 406 may view a virtual or mixed reality interface on a display (e.g., a wearable display). The user may interact with the virtual or mixed reality by moving, squeezing, pressing, swiping, or otherwise interacting with the handheld device 402.

As the user interacts with the handheld device 402 a processor may receive signals from sensors of the device and control one or more characters or objects in mixed reality or virtual reality. Throughout this interaction the handheld device, or a processor communicatively coupled to the handheld device, determines and outputs haptic effects configured to simulate the compliance of objects in mixed reality or virtual reality. In some embodiments, these haptic effects may simulate the stiffness or softness of those objects. For example, in some embodiments objects may feel stiff, like a marble. In other embodiments, the objects may feel comparatively compliant, e.g., like an inflated balloon or water balloon. In other embodiments, the haptic effects may simulate movement of characters or objects. In still other embodiments, the haptic effects may simulate friction or resistance as the user moves one or more objects in mixed reality or virtual reality.

### Illustrative Methods for Compliance Illusions with Haptics

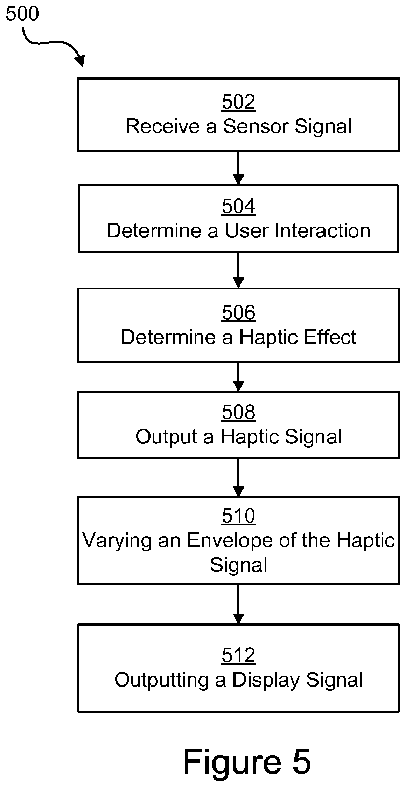

Figure 5 is a flow chart of steps for performing a method for compliance illusions with haptics according to one embodiment. In some embodiments, the steps in Figure 5 may be implemented in program code that is executed by a processor, for example, the processor in a general purpose computer, a mobile device, or a server. In some embodiments, these steps may be implemented by a group of processors. In some embodiments one or more steps shown in Figure 5 may be omitted or performed in a different order. Similarly, in some embodiments, additional steps not shown in Figure 5 may also be performed. The steps below are described with reference to components described above with regard to computing device 100 shown in Figure 1.

The method 500 begins at step 502 when the processor 102 receives a sensor signal from sensor 108. Sensor 108 may comprise one or more of a plurality of sensors known in the art, for example, resistive and/or capacitive sensors may be embedded in touch surface 116 and used to determine the location of a touch and other information, such as pressure. As another example, optical sensors with a view of the touch surface may be used to determine the touch position. In still other embodiments, sensors 108 and touch surface 116 may comprise a touch screen display. In still other embodiments, sensors 108 may be configured to detect the amount of pressure applied by the user during a user interaction, e.g., the pressure applied to the surface or sides of device 100. In still other embodiments, sensors 108 may comprise sensors configured to detect the orientation and/or movement of the device 100 (e.g., inertial sensors, velocity sensors, GPS sensors, etc.).

Further, in some embodiments, touch surface 116 and or sensor(s) 108 may comprise a sensor that detects user interaction without relying on a touch sensor. For example, in one embodiment, the sensor may comprise a sensor configured to use electromyography (EMG) signals to detect pressure applied by a user on a surface. Further, in some embodiments, the sensor may comprise RGB or thermal cameras and use images captured by these cameras to estimate an amount of pressure the user is exerting on a surface. For example, in one embodiment, in a mixed or virtual reality environment, the user may touch a surface or object that exists in mixed or virtual reality, but does not exist in the real world. In such an embodiment, the pressure the user applies to the virtual surface or object may be simulated as the moving distance of the user's hand toward the virtual surface or object. In some embodiments the user's gesture may be tracked by, e.g., one or more camera sensors (such as Leap motion), any gesture tracking sensors attached to a computer device 101 or a device communicatively coupled to the device (e.g., a wearable device). Further, in some embodiments, the user's gesture may further be associated with other inputs such as joysticks, buttons, keyboards, etc.

At step 504 the processor 102 determines a user interaction. This user interaction may comprise an interaction in a mixed reality or virtual reality environment, e.g., an interaction with one or more characters in a mixed reality or virtual reality environment shown on a display. In some embodiments, this interaction may be through sensors 108 or input output devices 112 described above.

At step 506 the processor 102 determines a haptic effect. In some embodiments the haptic effect may be configured to simulate features associated a mixed reality or virtual reality interface, for example, to simulate compliance of objects or characters in the interface. In some embodiments, the processor 102 may determine a haptic effect by determining and/or modifying a grain size, grain density, max grain per cycle, and/or grain magnitude for a haptic signal, based in part on the touch (e.g., the pressure of the touch). Alternatively, in some embodiments, haptic effect determination module 126 may comprise one or more preloaded haptic effects, e.g., haptic effects associated with particular objects in a mixed reality or virtual reality environment.

In other embodiments, the processor 102 may determine a haptic effect based on user selection. For example, the user may select an available haptic effect. For example, a data store of computing device 101 may comprise data associated with multiple haptic effects, which a haptic designer or user may select. Further, the haptic designer or user may adjust characteristics associated with the haptic effect. For example, the haptic designer may modify the duration, frequency, intensity, or some other characteristic associated with the haptic effect. In some embodiments, the processor 102 may automatically select the haptic effect. For example, in some embodiments, the processor 102 may select a haptic effect associated with events occurring within a video displayed on the face of a display of computing device 101. Further, in some embodiments, processor 102 may execute predesigned algorithms to modify parameters of the haptic effects.

At step 508 the processor 102 outputs a haptic signal to a haptic output device 118. To output the haptic effect the processor 102 may transmit a haptic signal associated with the haptic effect to haptic output device 118, which outputs the haptic effect.

At step 510 the processor 102 varies an envelope of the haptic signal. For example, the processor may modify one or more of the grain size, grain density, max grain per cycle, and/or grain magnitude for a haptic signal, based in part on the touch (e.g., the pressure of the touch). These modifications may alter the user's perception of the haptic effect, e.g., the user may feel a different and/or varying compliance as the processor 102 varies the parameters of the haptic effect. For example, in one embodiment, the "grain" used to create the haptic effect may be modified to create different types of compliance in the device 100. In such an embodiment the processor 102 may modify a sinusoidal carrier wave of the haptic signal to have frequencies from 80Hz to 300Hz, while the rest of the grain remains the same. In such an embodiment, the frequency variation may simulate smooth to rough deformation illusions felt by the user of the device 100.

At step 512 the processor outputs a display signal to audio visual output device(s) 115, which may comprise a display. In some embodiments, the display signal may comprise the characters and or objects in the mixed reality or virtual reality interface. The object or character may react to the user interaction at the same time the haptic effect is output, thus further increasing the reality of the mixed reality or virtual reality experience. For example, in some embodiments, the effect may be enhanced with the visual effect. In one such example, the user may move 30 cm but the virtual object only moves 10 cm giving the impression of a heavy object and high friction within the mixed reality interface. Further, in some embodiments, the illusion can be used in the user interface context. In one such embodiment, a force sensitive touch screen can have icons/buttons that have different compliance (soft, hard) associated with different functions in the UI.

There are numerous advantages of compliance illusions with haptics. Embodiments discussed herein lead to more realistic mixed reality or virtual reality experiences. Thus, user's may have greater pleasure and experience when interacting with devices and software equipped with the features described herein. Thus, each of the examples above increase user satisfaction and thus lead to greater user adoption of the technology described herein.

### General Considerations

The methods, systems, and devices discussed above are examples. Various configurations may omit, substitute, or add various procedures or components as appropriate. For instance, in alternative configurations, the methods may be performed in an order different from that described, and/or various stages may be added, omitted, and/or combined. Also, features described with respect to certain configurations may be combined in various other configurations. Different aspects and elements of the configurations may be combined in a similar manner. Also, technology evolves and, thus, many of the elements are examples and do not limit the scope of the disclosure or claims.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations only, and does not limit the scope, applicability, or configurations of the claims. Rather, the preceding description of the configurations will provide those skilled in the art with an enabling description for implementing described techniques. Various changes may be made in the function and arrangement of elements without departing from the spirit or scope of the disclosure.

Also, configurations may be described as a process that is depicted as a flow diagram or block diagram. Although each may describe the operations as a sequential process, many of the operations can be performed in parallel or concurrently. In addition, the order of the operations may be rearranged. A process may have additional steps not included in the figure. Furthermore, examples of the methods may be implemented by hardware, software, firmware, middleware, microcode, hardware description languages, or any combination thereof. When implemented in software, firmware, middleware, or microcode, the program code or code segments to perform the necessary tasks may be stored in a non-transitory computer-readable medium such as a storage medium. Processors may perform the described tasks.

Having described several example configurations, various modifications, alternative constructions, and equivalents may be used without departing from the spirit of the disclosure. For example, the above elements may be components of a larger system, wherein other rules may take precedence over or otherwise modify the application of the system and methods described herein. Also, a number of steps may be undertaken before, during, or after the above elements are considered. Accordingly, the above description does not bound the scope of the claims.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or values beyond those recited. Headings, lists, and numbering included herein are for ease of explanation only and are not meant to be limiting.

Embodiments in accordance with aspects of the present subject matter can be implemented in digital electronic circuitry, in computer hardware, firmware, software, or in combinations of the preceding. In one embodiment, a computer may comprise a processor or processors. The processor comprises or has access to a computer-readable medium, such as a random access memory (RAM) coupled to the processor. The processor executes computer-executable program instructions stored in memory, such as executing one or more computer programs including a sensor sampling routine, selection routines, and other routines to perform the methods described above.

Such processors may comprise a microprocessor, a digital signal processor (DSP), an application-specific integrated circuit (ASIC), field programmable gate arrays (FPGAs), and state machines. Such processors may further comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example tangible computer-readable media, that may store instructions that, when executed by the processor, can cause the processor to perform the steps described herein as carried out, or assisted, by a processor. Embodiments of computer-readable media may comprise, but are not limited to, all electronic, optical, magnetic, or other storage devices capable of providing a processor, such as the processor in a web server, with computer-readable instructions. Other examples of media comprise, but are not limited to, a floppy disk, CD-ROM, magnetic disk, memory chip, ROM, RAM, ASIC, configured processor, all optical media, all magnetic tape or other magnetic media, or any other medium from which a computer processor can read. Also, various other devices may include computer-readable media, such as a router, private or public network, or other transmission device. The processor, and the processing, described may be in one or more structures, and may be dispersed through one or more structures. The processor may comprise code for carrying out one or more of the methods (or parts of methods) described herein.

While the present subject matter has been described in detail with respect to specific embodiments thereof, it will be appreciated that those skilled in the art, upon attaining an understanding of the foregoing may readily produce alterations to, variations of, and equivalents to such embodiments. Accordingly, it should be understood that the present disclosure has been presented for purposes of example rather than limitation, and does not preclude inclusion of such modifications, variations and/or additions to the present subject matter as would be readily apparent to one of ordinary skill in the art.

## Claims

1. A system (100) comprising:
a user interface device (101) comprising:
a sensor (108) configured to detect a gesture;
a haptic output device (118) configured to output haptic effects; and
a processor (102) coupled to the sensor (108) and the haptic output device (118), the processor configured to:
receive a sensor signal from the sensor (108);
determine a user interaction with a virtual object;
determine a haptic effect based in part on the sensor signal and the user interaction; and
transmit a haptic signal associated with the haptic effect to the haptic output device (118).

2. The system of claim 1, wherein the haptic signal comprises a sinusoidal carrier wave comprising an envelope and wherein the processor (102) is configured to vary the magnitude of the envelope based in part on a pressure of the gesture.

3. The system of claim 1 or claim 2, wherein the haptic effect is configured to simulate compliance of the virtual object.

4. The system of any preceding claim, wherein the gesture comprises movement between a first location and a second location and wherein determining a haptic effect comprises determining a haptic effect that changes based in part on a function of a distance between the first location and the second location.

5. The system of claim 4, wherein the processor (102) is configured to change one or more of the frequency, amplitude, grain size, grain magnitude, or grain density of the haptic effect based in part on the distance.

6. The system of claim 4 or claim 5, wherein the first location and the second location comprise positions in mixed reality.

7. The system of claim 4 or claim 5, wherein the first location and the second location comprise positions in real space.

8. The system of any preceding claim, wherein the processor (102) is part of a remote device communicatively coupled to the user interface device (101).

9. The system of any of claims 1 to 7, wherein the processor (102) is a component of the user interface device, and wherein the user interface device (101) comprises a wearable device or a handheld device.

10. The system of any preceding claim wherein the sensor (108) is configured to detect the pressure from a user's grip and the haptic output device (118) is configured to output haptic effects to the user's palm.

11. The system of any preceding claim, wherein the haptic output device (118) comprises one or more of: a piezoelectric actuator, an electric motor, an electro-magnetic actuator, a voice coil, a shape memory alloy, an electro-active polymer, a solenoid, an eccentric rotating mass motor, a linear resonant actuator, or an electrostatic output device.

12. A method comprising:
receiving a sensor signal from a sensor (108) configured to detect a gesture;
determining a user interaction with a virtual object;
determining a haptic effect based in part on the sensor signal and the user interaction; and
outputting a haptic signal associated with the haptic effect to a haptic output device (118) configured to output haptic effects.

13. The method of claim 12, wherein the haptic signal comprises a sinusoidal carrier wave comprising an envelope and further comprising varying the magnitude of the envelope based in part on a pressure of the gesture.

14. The method of claim 12 or claim 13, further comprising outputting a display signal associated with mixed reality.

15. A non-transitory computer readable medium comprising program code, which when executed by a processor (102) is configured to cause the processor to give effect to the method as claimed in any of claims 11-14.
